# EUROPEAN PATENT APPLICATION

(11) **EP 2 977 857 A1**
(43) Date of publication of application: **27.01.2016**
(21) Application number: 14178591.5
(22) Date of filing: 25.07.2014
(51) Int. Cl.: G06F 3/01, G06F 3/16

(54) **Device-specific control**

(71) Applicant: Rovio Entertainment Ltd, 02150 Espoo (FI)
(72) Inventor: Pesonen, Mika, 02150 Espoo (FI); Rajala, Johannes, 02150 Espoo (FI)
(74) Representative: Boco IP Oy Ab

(57) **Abstract**

According to an example aspect of the present invention, there is provided an apparatus comprising at least one processing core, memory including computer program code, the memory and the computer program code being configured to, with the at least one processing core, cause the apparatus at least to receive from a plurality of physical devices indications relating to locations of the physical devices, wherein each physical device corresponds to a virtual space element, compute, for at least one of the plurality of physical devices, a sound level for a sound associated with a virtual space event, and cause transmission, to each of the plurality of physical devices, information identifying the sound and a sound level specific to the individual physical device.

## Description

### FIELD OF INVENTION

The present invention relates to the distribution of media information to physical devices associated with virtual space elements.

### BACKGROUND OF INVENTION

Maps record geographical or urban features of a landscape, and can be conveniently printed on paper which may be folded to a compact size for easy portability and reference. In other words, features in maps correspond to features in terrain via a mapping. Such a mapping may comprise a scale. By consulting a map a person is enabled to discover aspects of her surroundings that may not be obvious by surveying the surroundings visually. Examples of such aspects may include elevation, nearby buildings, nearby streets, public transport connections and municipal or international borders.

A map may record geographical features of terrain, for example for an entire country, or a map may comprise urban features of a city or part thereof. Some maps, such as digital maps, comprise both geographical and urban features, wherein urban features become prominent when the digital map is zoomed to a scale where the urban features are significant.

Industrial plants may be mapped to a functional map, such that the functional map comprises features that are relevant to an industrial process run in the plant. In detail, the functional map may have represented therein process phases in such a way that a skilled person consulting the functional map can learn features of the process. A functional map may have active components, such as warning lights and/or audible warning signals, arranged to provide dynamic information of current process parameters, such as temperature and/or pressure, for example.

Interacting with data may be accomplished via an operating system, such as the Linux operating system, wherein a user may input, using a keyboard, textual commands into a command window displayed on a screen device. Responsive to the textual commands, the operating system may perform operations on data, which may be stored on data files. For example, data files may be copied, moved, archived or compressed in dependence of the textual commands input by the user.

Some operating systems, such as Windows, feature a virtual desktop with icons representing programs, files and folders. Using a pointing device, such as for example a computer mouse, a user may activate, delete or move the icons to cause the operating system to take actions the user wishes. Operating systems may provide audio signals, such as beeps, to communicate to users, for example of error conditions.

### SUMMARY OF THE INVENTION

According to a first aspect of the present invention, there is provided an apparatus comprising at least one processing core, at least one memory including computer program code, the at least one memory and the computer program code being configured to, with the at least one processing core, cause the apparatus at least to receive from a plurality of physical devices indications relating to locations of the physical devices, wherein each physical device corresponds to a virtual space element, compute, for at least one of the plurality of physical devices, a media playback level for a media item associated with a virtual space event, and cause transmission, to each of the plurality of physical devices, information identifying the media item and a media playback level level specific to the individual physical device.

Various embodiments of the first aspect may comprise at least one feature from the following bulleted list:
- the indications relating to locations of the physical devices comprise indications relating to locations of the physical devices on a physical surface
- the indications relating to locations of the physical devices comprise indications relating to locations, in the virtual space, of virtual elements corresponding to the physical devices, the locations in virtual space corresponding, via a mapping, to locations of the physical devices on a physical surface
- the computing comprises using a metric internal to the virtual space
- the computing comprises accounting for attenuation of sound caused by virtual objects in the virtual space
- the transmission comprises transmitting, to each of the at least one physical device, of time information indicating when the media item should be played
- the virtual space has a structure of a discrete representation of a differentiable manifold
- the metric comprises a Cartesian metric
- the at least one memory and the computer program code are configured to, with the at least one processing core, cause the apparatus further to transmit to each of the at least one physical device an indication of source indicating a location from where the media item originates.

According to a second aspect of the present invention, there is provided an apparatus comprising at least one receiver configured to receive sensor information, at least one processing core configured to determine, based at least in part on the sensor information, information identifying a location of the apparatus on a physical surface and to cause transmission of either the information identifying the location on the physical surface or of information identifying a location in a virtual space corresponding, via a mapping, to the location on the physical surface, wherein the at least one processing core is configured to, responsive to receiving information identifying a media item and a media playback level specific to the apparatus, cause the media item to be played at the media playback level specific to the apparatus.

Various embodiments of the second aspect may comprise at least one feature from the following bulleted list:
- the apparatus is configured to further receive time information indicating when the media item should be played, and wherein the at least one processing core is configured to cause the media item to be played substantially at the indicated time
- the apparatus further comprises a loudspeaker element, and wherein the at least one processing core is configured to cause the media item to be played by causing the loudspeaker element to play the media item, wherein the media item comprises a sound
- the apparatus is configured to receive the information identifying the media item over a wireless interface
- the at least one processing core is configured to modify the media playback level of the media item being played responsive to a determination that the apparatus moves while the media item is being played
- the at least one processing core is configured to modify the media playback level based at least in part on an indication of source indicating a location from where the media item originates

According to a third aspect of the present invention, there is provided a method comprising receiving from a plurality of physical devices indications relating to locations of the physical devices, wherein each physical device corresponds to a virtual space element, computing, for at least one of the plurality of physical devices, a media playback level for a media item associated with a virtual space event, and causing transmission, to each of the plurality of physical devices, of information identifying the media item and a media playback level specific to the individual physical device.

Various embodiments of the third aspect may comprise at least one feature corresponding to a feature from the preceding bulleted list laid out in connection with the first aspect.

According to a fourth aspect of the present invention, there is provided a method comprising receiving sensor information, determining, based at least in part on the sensor information, information identifying a location of an apparatus on a physical surface, causing transmission of either the information identifying the location on the physical surface or of information identifying a location in a virtual space corresponding, via a mapping, to the location on the physical surface, and responsive to receiving information identifying a media item and a media playback level specific to the apparatus, causing the media item to be played at the media playback level specific to the apparatus.

Various embodiments of the fourth aspect may comprise at least one feature corresponding to a feature from the preceding bulleted list laid out in connection with the second aspect.

According to a fifth aspect of the present invention, there is provided an apparatus comprising means for receiving, from a plurality of physical devices, indications relating to locations of the physical devices, wherein each physical device corresponds to a virtual space element, means for computing, for at least one of the plurality of physical devices, a media playback level for a media item associated with a virtual space event, and means for causing transmission, to each of the plurality of physical devices, information identifying the media item and a media playback level specific to the individual physical device.

According to a sixth aspect of the present invention, there is provided an apparatus comprising means for receiving sensor information, means for determining, based at least in part on the sensor information, information identifying a location of an apparatus on a physical surface, means for causing transmission of either the information identifying the location on the physical surface or of information identifying a location in a virtual space corresponding, via a mapping, to the location on the physical surface, and means for causing a media item to be played at a media playback level specific to the apparatus, responsive to receiving information identifying the media item and the media playback level specific to the apparatus.

According to a seventh aspect of the present invention, there is provided a non-transitory computer readable medium having stored thereon a set of computer readable instructions that, when executed by at least one processor, cause an apparatus to at least receive from a plurality of physical devices indications relating to locations of the physical devices, wherein each physical device corresponds to a virtual space element, compute, for at least one of the plurality of physical devices, a media playback level for a media item associated with a virtual space event, and cause transmission, to each of the plurality of physical devices, of information identifying the media item and a media playback level specific to the individual physical device.

According to an eighth aspect of the present invention, there is provided a non-transitory computer readable medium having stored thereon a set of computer readable instructions that, when executed by at least one processor, cause an apparatus to at least receive sensor information, determine, based at least in part on the sensor information, information identifying a location of an apparatus on a physical surface, cause transmission of either the information identifying the location on the physical surface or of information identifying a location in a virtual space corresponding, via a mapping, to the location on the physical surface, and responsive to receiving information identifying a media item and a media playback level specific to the apparatus, cause the media item to be played at the media playback level specific to the apparatus.

According to a ninth aspect, there is provided a system comprising at least one apparatus in accordance with the first aspect and at least one apparatus in accordance with the second aspect.

### Industrial Applicability

At least some embodiments of the present application find industrial application in facilitating interaction with information stored in a virtual space.

### BRIEF DESCRIPTION OF THE DRAWINGS

FIGURE 1 illustrates a system capable of supporting at least some embodiments of the present invention;
FIGURE 2 illustrates an example use case of at least some embodiments of the present invention;
FIGURE 3 illustrates an example apparatus capable of supporting at least some embodiments of the present invention;
FIGURE 4 illustrates signalling in accordance with at least some embodiments of the present invention;
FIGURE 5 is a first flow chart of a first method in accordance with at least some embodiments of the present invention, and
FIGURE 6 is a second flow chart of a second method in accordance with at least some embodiments of the present invention.

### DETAILED DESCRIPTION OF EXAMPLE EMBODIMENTS

As humans are capable of registering sound from different directions, physical devices may emit sounds to assist humans in gathering information. Where also a sound level is selected to reflect a distance to source of sound, human users may be further enabled to understand information being presented to them when interacting with information in a virtual space.

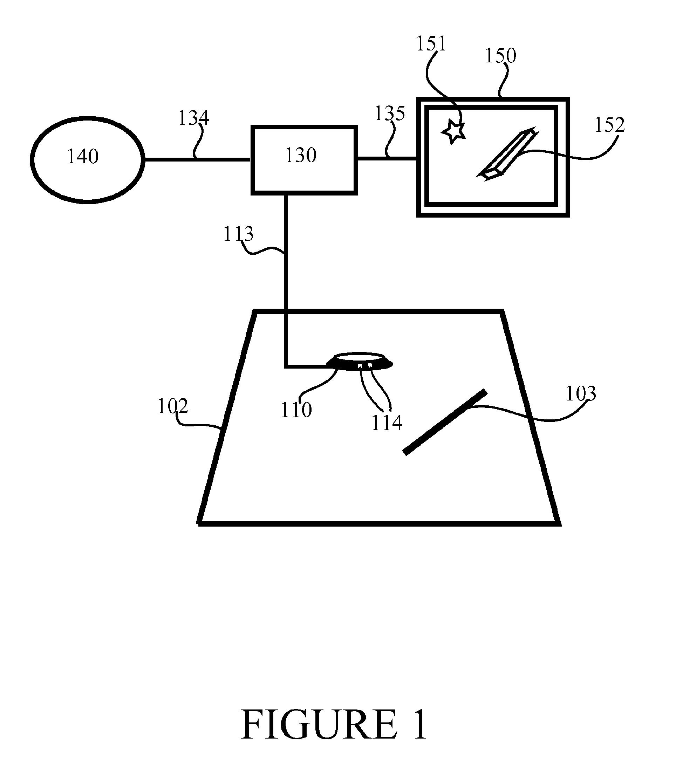

FIGURE 1 illustrates a system capable of supporting at least some embodiments of the present invention. Physical surface 102 may comprise, for example, a printed map or other suitable surface capable of supporting thereon device 110. Device 110 comprises a physical object capable of lying on physical surface 102, pressed against it by gravity such that physical surface 102 in turn rests on a suitable further surface or object. In case physical surface 102 is at an angle, friction between physical surface 102 and device 110 may keep device 110 stationary with respect to physical surface 102.

Device 110 is in communication with computer 130 via connection 113. Connection 113 may be a wire-line connection, such as an Ethernet or universal serial port, USB, connection, or it may be at least in part a wireless connection, such as a Wi-Fi or Bluetooth connection, for example. Computer 130 in turn may be connected, via connection 134, to network 140. In some embodiments, network 140 is absent. Computer 130, or a device accessible via network 140, may comprise a server function that maintains a virtual space. Computer 130 is connected, via connection 135, to display 150. In some embodiments, display 150 is comprised in the same physical unit as computer 130, in which case connection 135 is internal to this physical unit. An example of such a physical unit is a tablet computer.

Device 110 may be configured to determine where on physical surface 102 it is located. To such end, device 110 may comprise, on a side facing physical surface 102, a sensor such as, for example, a camera arranged to image the underlying physical surface 102. Physical surface 102 may comprise printed thereon a predetermined dot, micro-dot, barcode or other suitable pattern the camera is able to detect, and device 110 may be furnished with a mapping from the pattern to a location on physical surface 102. In addition to location, an orientation of device 110 on physical surface 102 may be determinable based on sensing the pattern.

Alternatively to a camera, device 110 may employ a different kind of sensor unit to obtain sensor information enabling the determination of the location and/or orientation of device 110 on physical surface 102. For example, device 110 may comprise a near-field communication, NFC, sensor configured to detect NFC tags implanted in physical surface 102. Camera data and NFC sensing data are examples of sensor information. Sensor information may be processed to compress it, or to improve its usability for determining the location and/or orientation of device 110 on physical surface 102. Processed sensor information may also be referred to as sensor information in that it is information originating in at least one sensor, processed or otherwise.

While in the foregoing it is described that device 110 is configured to determine its location and/or orientation on physical surface 102, in some embodiments device 110 is configured to provide to computer 130 sensor information obtained by device 110 of physical surface 102, to enable computer 130 to determine the location and/or orientation of device 110 on physical surface 102. Computer 130 may provide this location and/or orientation to device 110 if this is necessary, wherein receipt of the location and/or orientation in device 110 amounts to obtaining the location and/or orientation in device 110.

Device 110 may be powered via connection 113, for example via an electrical lead comprised in an electrical cable in embodiments where connection 113 is wire-line. Alternatively or additionally, device 110 may comprise a disposable or rechargeable battery.

Device 110 may be configured to, being in possession of the location and/or orientation of device 110 on physical surface 102, derive a location and/or orientation in virtual space that corresponds to the location and/or orientation of device 110 on physical surface 102. The correspondence of the location on physical surface 102 on the one hand, and the location in the virtual space on the other hand, may be via a suitable mapping. Physical surface 102 may correspond, via the mapping, to all or part of the virtual space. The mapping may comprise use of a scale, such that, for example, a distance of 1 centimetre on physical surface 102 may correspond to a distance of one metre, one kilometre or one nautical mile, in the virtual space.

Device 110 may be configured to provide, for example to computer 130, the location and/or orientation in the virtual space that corresponds to the location and/or orientation of device 110 on physical surface 102.

After providing the location and/or orientation in the virtual space to computer 130, device 110 may obtain a second location and/or orientation of itself on physical surface 102. A user may have moved device 110 on physical surface 102, for example. Responsive to a determination, by device 110, that it has moved on physical surface 102, device 110 may provide an updated location and/or orientation in virtual space to computer 130, wherein the updated location and/or orientation in virtual space corresponds, via the mapping, to the new position and/or orientation of device 110 in physical surface 102.

Alternatively to device 110 determining the location and/or orientation in virtual space that corresponds to the location and/or orientation of device 110 on physical surface 102, computer 130 may determine this based on the sensor information provided by device 110 or based on the location and/or orientation of device 110 on physical surface 102. Computer 130 may obtain the location and/or orientation of device 110 on physical surface 102 by deriving it from the sensor information, or by receiving it from device 110, wherein device 110 may have derived it from the sensor information.

Device 110 may comprise at least one physical button 114. Device 110 may be configured to inform computer 130 responsive to activation of physical button 114. In case device 110 comprises more than one physical button 114, device 110 may be configured to inform computer 130 which one of the physical buttons 114 was activated. Activation of a physical button may comprise that a user presses the physical button. Physical button 114 may be labelled so that the user knows what effect pressing the button will have. Alternatively to an identity of a physical button, device 110 may be configured to inform computer 130 concerning a function associated with an activated button.

Computer 130 may be configured to provide to display 150 signals configured to cause display 150 to display a view into the virtual space, for example to a section of the virtual space that corresponds, via the mapping, at least in part, to physical surface 102. In FIGURE 1, a virtual space element 151 corresponding to device 110 is displayed on display 150. The location of virtual space element 151 in the virtual space, and thus on display 150, may be determined, at least in part via the mapping, based on the location of device 110 on physical surface 102. In detail, the location and/or orientation of virtual space element 151 in the virtual space may correspond, via the mapping, to the location and/or orientation of device 110 on physical surface 102.

Illustrated in FIGURE 1, on display 150, is further object 152, which corresponds to static feature 103 imprinted in physical surface 103. Static feature 103 may be permanently printed on physical surface 103, and thus will not move. Correspondingly, object 152 in the virtual space does not move in the virtual space. Objects in virtual space, such as for example object 152, may be associated with sound attenuation factors.

Where computer 130 determines an event in the virtual space that is associated with a sound, computer 130 may determine whether virtual space element 151 is within a sound range of the sound. In some embodiments sound ranges encompass the entire virtual space and determining whether an individual virtual space element is within sound range is thus unnecessary. Computer 130 may determine, for virtual space element 151, a sound level specific to virtual space element 151 and cause transmission of an instruction to device 110, wherein the instruction is configured to cause device 110 to play the sound substantially at the determined sound level, which is specific to virtual space element 151. The derives sound level may depend, for example, on at least one of a distance, in the virtual space, between the virtual-space element and the event associated with the sound and whether there are sound-attenuating objects in the virtual space between the virtual space element and the event.

As an example of determining a sound level, computer 130 may obtain a distance in virtual space between the event and the virtual space element, and determine, using the distance and a sound distance attenuation factor, the virtual space element-specific sound level. Computer 130 may further modify the virtual space element-specific sound level with sound attenuation factors associated with any virtual space objects that are disposed between the event and the virtual space element in the virtual space. For example, if the sound distance attenuation factor is 2 dB per distance unit, the distance between the virtual space element and the event is 2,5 distance units, and a virtual space object associated with a sound attenuation factor of 3 dB is disposed between the event and the virtual space element in the virtual space, a virtual element specific sound level at the virtual space element could be 8 dB below the sound level at the event.

Computer 130 may provide to display 150 a signal configured to cause display 150 to display a visual indication of the event, substantially at the same time as at least one device on physical surface 102 is to play the sound the event is associated with. Devices on physical surface 102 may be instructed by computer 130 to play the sound, wherein such instructing may comprise a sound identifier or sound data file characterising the sound, and, optionally, a time when the sound should be played.

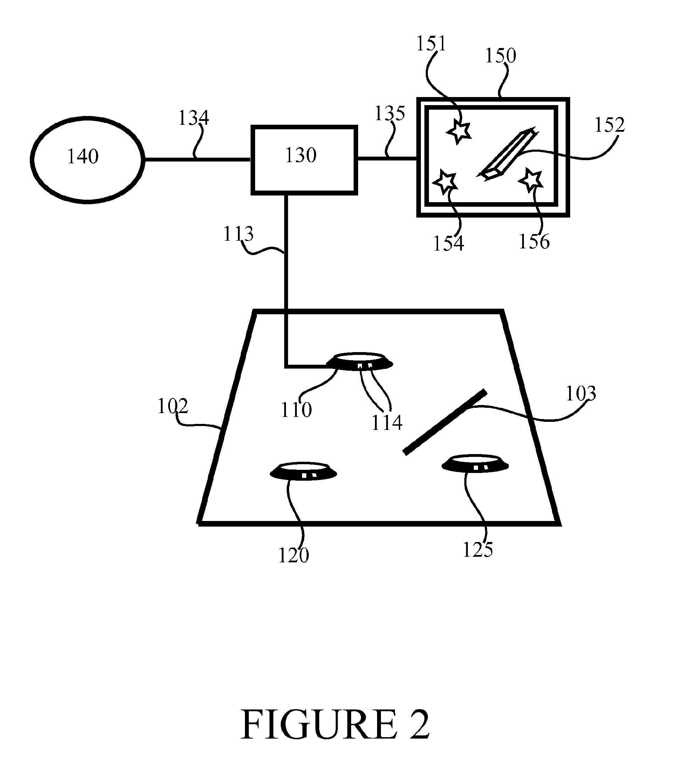

FIGURE 2 illustrates an example use case of at least some embodiments of the present invention. Like reference signs in correspond to like structure as in FIGURE 1. FIGURE 2 includes, in addition to subject-matter present in FIGURE 1, devices 120 and 125 which may be similar, or of similar type, as device 110. Devices 120 and 125 may be in communication with computer 130 via connections similar to connection 113. Such connections are not illustrated in FIGURE 2 for the sake of clarity. Further, virtual space element 154, corresponding to device 120, and virtual space element 156, corresponding to device 125, are displayed on display 150. The location of virtual space element 154 may be determined based at least in part on a location of device 120 on physical surface 102. The location of virtual space element 156 may be determined based at least in part on a location of device 125 on physical surface 102. In the example of FIGURE 2, virtual space object 152 is associated with a sound attenuation factor of 3 dB. The locations of virtual space elements 154 and 156 in the virtual space may be determined based on the locations and/or orientations of devices 120 and 125 on physical surface 102 in a similar way as the location of virtual space element 151 in the virtual space is determined based on the location and/or orientation of device 110 on physical surface 102.

A device managing the virtual space, for example computer 130, determines an event in the virtual space that is associated with a sound. The sound may be characterized by a sound identifier or sound data file. The sound may be characterized by a sound level. This sound level may indicate the sound level at a location in the virtual space where the event occurs. In the example of FIGURE 2, the event is determined to occur in the virtual space at the location where virtual space element 151 is located. To determine virtual space element-specific sound levels for each of virtual space elements 151, 154 and 156, computer 130 assesses for each virtual space element a distance to the location of the event. For virtual space element 151, the distance is zero, and consequently no distance attenuation will occur. For virtual space element 154 and virtual space element 156, the distance to the event is non-zero as these virtual space elements are not located where the event occurs. Computer 130 may further assess, whether any virtual space objects are disposed between a virtual space element and the event. Virtual space object 152 is disposed between the event and virtual space element 156, but no virtual space object is disposed between virtual space element 151 and the event, or between virtual space element 154 and the event. Determining whether a virtual space object is disposed between an event and a virtual space element may be accomplished by employing geometrical considerations appropriate to topological features of the virtual space.

The virtual space element-specific sound level for virtual space element 151 will in this example be equal to the sound level of the event, since the distance to the event is zero and no objects are disposed between the virtual space element and the event. The virtual space element-specific sound level for virtual space element 154 will in this example be equal to the sound level of the event attenuated by the distance between the virtual space element and the event. The virtual space element-specific sound level for virtual space element 156 will in this example be equal to the sound level of the event attenuated by the distance between the virtual space element and the event, and by the sound attenuation factor associated with virtual space object 152.

To cause devices 110, 120 and 125 to play the sound at substantially the same time, computer 130 may advise the devices of a time when the sound is to be played. This time may be expressed in a suitable reference format, such as for example a time internal to the virtual space, or alternatively a time of the real world.

Computer 130, being in possession of the virtual space element-specific sound levels for virtual space elements 151, 154 and 156, may then communicate the virtual space element-specific sound levels, as device-specific sound levels, to the corresponding devices 110, 120 and 125, respectively. Computer 130 may further provide to the devices the sound identifier or sound data file characterizing the sound.

Computer 130 may provide to display 150 a signal configured to cause display 150 to display a visual indication of the event, for example substantially at the same time as devices 110, 120 and 125 are instructed to play the sound the event is associated with.

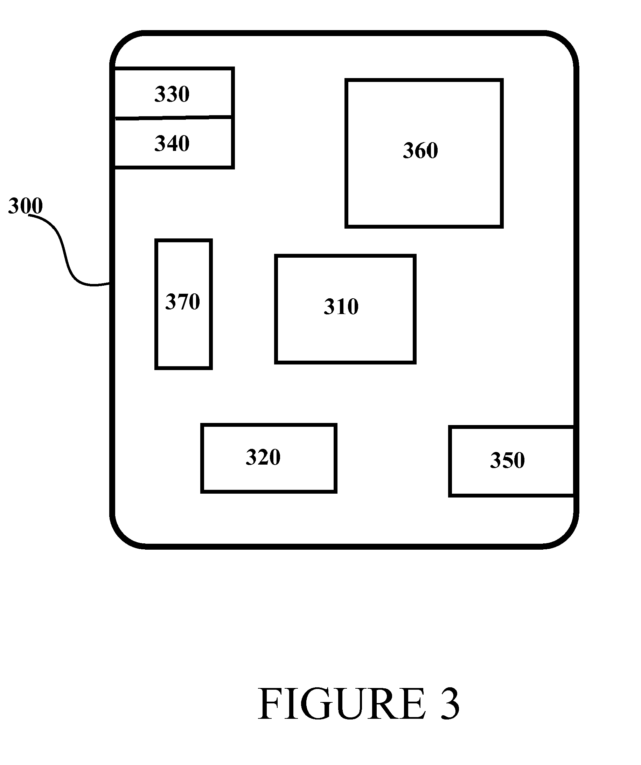

FIGURE 3 illustrates an example apparatus capable of supporting at least some embodiments of the present invention. Illustrated is device 300, which may comprise, for example, device 110 of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise a Qualcomm Snapdragon 800 processor, for example. Processor 310 may comprise more than one processor. A processing core may comprise, for example, a Cortex-A8 processing core manufactured by Intel Corporation or a Brisbane processing core produced by Advanced Micro Devices Corporation. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise magnetic, optical and/or holographic memory, for example. Memory 320 may be at least in part accessible to processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and/or a microphone.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

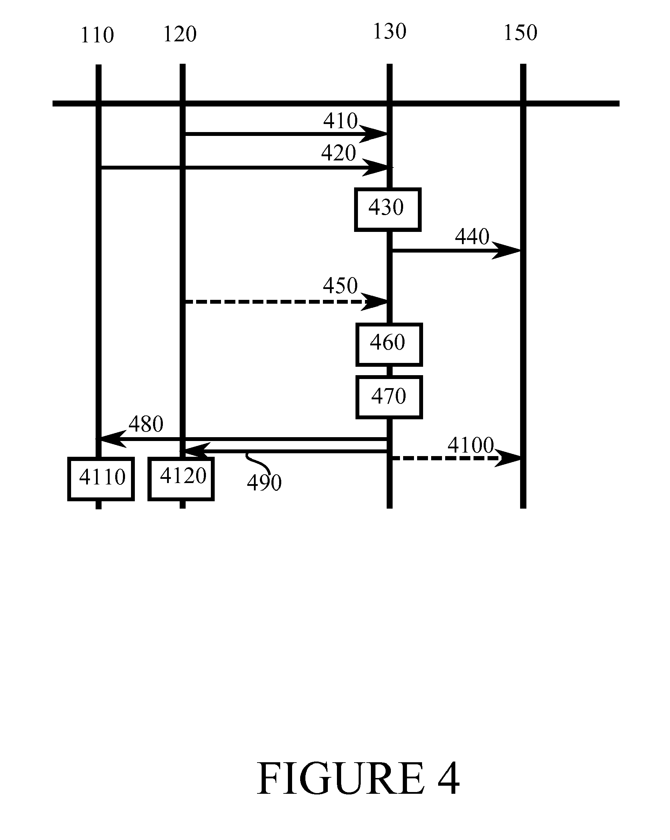

FIGURE 4 illustrates signalling in accordance with at least some embodiments of the present invention. On the vertical axes are disposed, from left to right, device 110, device 120, computer 130 and display 150. These apparatuses have been described above in connection with FIGURE 1 and FIGURE 2. Time advances from the top toward the bottom. Computer 130 may be configured to maintain a virtual space.

In phase 410, device 120 transmits to computer 130 at least one of sensor data concerning a physical surface on which device 120 is located, a location of device 120 on the physical surface, and a location of a virtual space element corresponding to device 120 in a virtual space corresponding to the physical surface.

In phase 420, device 110 transmits to computer 130 at least one of sensor data concerning a physical surface on which device 110 is located, a location of device 110 on the physical surface, and a location of a virtual space element corresponding to device 110 in a virtual space corresponding to the physical surface.

In phase 430, computer 130 processes information relating to the virtual space, which may comprise, for example, determining locations of device 110 and 120 on the physical surface, determining locations, in the virtual space, of virtual space elements corresponding to devices 110 and 120, and/or determining environmental conditions prevailing in the virtual space. Determining environmental conditions prevailing in the virtual space may comprise, for example, determining whether it is "day" or "night" in the virtual space, or determining an amount of unused memory resources in a file system that the virtual space represents.

In phase 440, computer 130 may provide to display 150 a signal configured to cause display 150 to display a view into the virtual space. Such a view may comprise representations of the virtual space elements corresponding to devices 110 and 120, for example. Phase 440 may be considered as continuous in that computer 130 may provide a continuous signal to display 150, which may be updated responsive to events occurring in the virtual space.

In phase 450, device 120 indicates to computer 130 an interaction that triggers an event in the virtual space, the event being associated with a sound. Phase 450 is optional, where it is absent, computer 130 may determine the event without specific input from device 120. Responsively, in phase 460, computer 130 determines which sound the event is associated with, and obtains a sound identifier or sound data file that characterizes the sound. In phase 470, computer 130 determines virtual space element-specific and/or device-specific sound levels, as described above.

In phases 480 and 490, computer 130 informs device 110 and 120, respectively, of the sound identifier or sound data file characterizing the sound and for each device, the device-specific sound level. Computer 130 may also inform the devices of a time, when the sound should be played.

In phases 4110 and 4120, devices 110 and 120, respectively, play the sound, each employing their respective device-specific sound level received from computer 130. In optional phase 4110, computer 130 signals to display 150 to cause the display to display a visual indication of the event, which may coincide in time with the sound being played in devices 110 and 120.

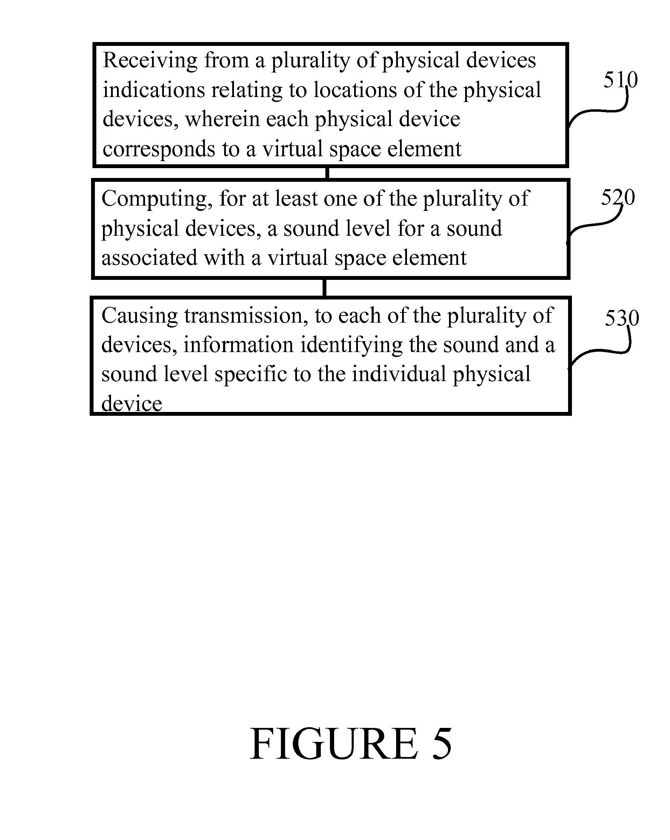

FIGURE 5 is a first flow chart of a first method in accordance with at least some embodiments of the present invention. The phases of the illustrated method may be performed in computer 130, for example. Phase 510 comprises receiving from a plurality of physical devices indications relating to locations of the physical devices, wherein each physical device corresponds to a virtual space element. Phase 520 comprises computing, for at least one of the plurality of physical devices, a sound level for a sound associated with a virtual space event. Finally, phase 530 comprises causing transmission, to each of the plurality of physical devices, of information identifying the sound and a sound level specific to the individual physical device.

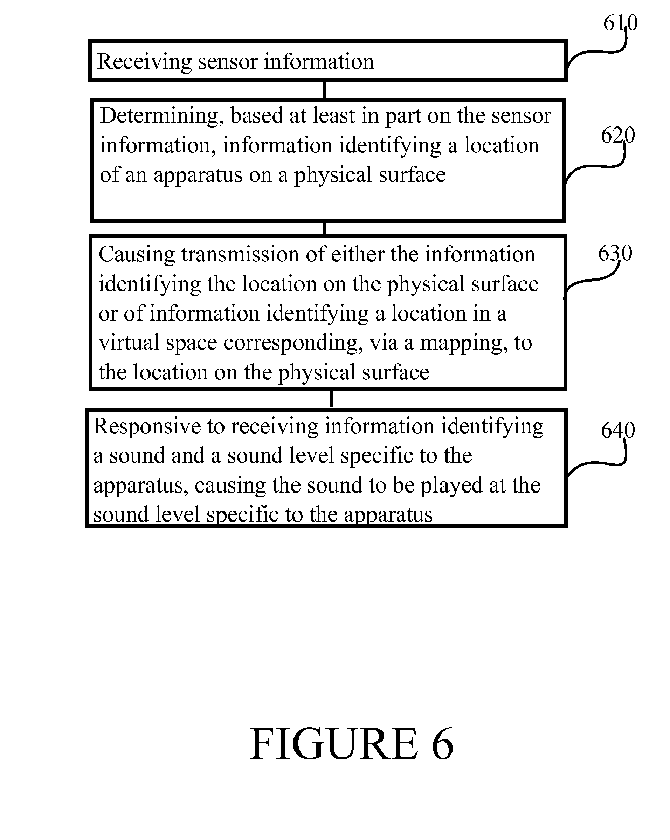

FIGURE 6 is a second flow chart of a second method in accordance with at least some embodiments of the present invention. The phases of the illustrated method may be performed in a device such as device 110, or in a control device configured to control a device such as device 110, for example. Phase 610 comprises receiving sensor information. Phase 620 comprises determining, based at least in part on the sensor information, information identifying a location of an apparatus on a physical surface. Phase 630 comprises causing transmission of either the information identifying the location on the physical surface or of information identifying a location in a virtual space corresponding, via a mapping, to the location on the physical surface. Finally, phase 640 comprises, responsive to receiving information identifying a sound and a sound level specific to the apparatus, causing the sound to be played at the sound level specific to the apparatus.

Although discussed above in connection with a sound level, in general the invention comprises also embodiments where a different media level is used, such as for example a light intensity level or an amplitude of vibration. Attenuation factors for such media may be defined analogously to those discussed above in connection with sound levels. A sound level is thus one example of a media playback level, other examples including at least the light intensity level and vibration amplitude level. A sound is an example of a media item, other examples including a flash of light and a vibration, for example.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. An apparatus comprising:
means for receiving, from a plurality of physical devices, indications relating to locations of the physical devices, wherein each physical device corresponds to a virtual space element;
means for computing, for at least one of the plurality of physical devices, a media playback level for a media item associated with a virtual space event, and
means for causing transmission, to each of the plurality of physical devices, information identifying the media item and a media playback level specific to the individual physical device.

2. An apparatus comprising:
means for receiving sensor information;
means for determining, based at least in part on the sensor information, information identifying a location of an apparatus on a physical surface;
means for causing transmission of either the information identifying the location on the physical surface or of information identifying a location in a virtual space corresponding, via a mapping, to the location on the physical surface, and
means for causing a media item to be played at a media playback level specific to the apparatus, responsive to receiving information identifying the media item and the media playback level specific to the apparatus.

3. A method comprising:
receiving from a plurality of physical devices indications relating to locations of the physical devices, wherein each physical device corresponds to a virtual space element;
computing, for at least one of the plurality of physical devices, a media playback level for a media item associated with a virtual space event, and
causing transmission, to each of the plurality of physical devices, of information identifying the media item and a media playback level specific to the individual physical device.

4. The method according to claim 3, wherein the indications relating to locations of the physical devices comprise indications relating to locations of the physical devices on a physical surface.

5. The method according to claim 3, wherein the indications relating to locations of the physical devices comprise indications relating to locations, in the virtual space, of virtual elements corresponding to the physical devices, the locations in virtual space corresponding, via a mapping, to locations of the physical devices on a physical surface.

6. The method according to any of claims 3 - 5, wherein the computing comprises using a metric internal to the virtual space.

7. The method according to any of claims 3 - 6, wherein the computing comprises accounting for attenuation of sound caused by virtual objects in the virtual space.

8. The method according to any of claims 3 - 7, wherein the transmission comprises transmitting, to each of the at least one physical device, of time information indicating when the media item should be played.

9. The method according to any of claims 6 - 8, wherein the virtual space has a structure of a discrete representation of a differentiable manifold.

10. The method according to any of claims 6 - 9, wherein the metric comprises a Cartesian metric.

11. The method according to any of claims 3 - 10, further comprising causing transmission to each of the at least one physical device of an indication of source indicating a location from where the media item originates.

12. A method comprising:
receiving sensor information;
determining, based at least in part on the sensor information, information identifying a location of an apparatus on a physical surface;
causing transmission of either the information identifying the location on the physical surface or of information identifying a location in a virtual space corresponding, via a mapping, to the location on the physical surface, and
responsive to receiving information identifying a media item and a media playback level specific to the apparatus, causing the media item to be played at the media playback level specific to the apparatus.

13. The method according to claim 12, further comprising receiving time information indicating when the media item should be played, and causing the media item to be played substantially at the indicated time.

14. A computer program configured to cause a method in accordance with at least one of claims 3 - 13 to be performed.

15. A system comprising at least one apparatus according to claim 1 and at least one apparatus according to claim 2.
